# EUROPEAN PATENT APPLICATION

(11) **EP 4 831 137 A1**
(43) Date of publication of application: **28.10.2026**
(21) Application number: 24922498.1
(22) Date of filing: 01.02.2024
(51) Int. Cl.: C03C 3/21, C03C 3/19, C03C 4/00, C03C 12/00, C08K 3/40, C08L 23/12, C08L 23/16, C08L 69/00, C08L 55/02, C08L 25/08

(54) **ANTIBACTERIAL GLASS COMPOSITION, METHOD FOR MANUFACTURING ANTIBACTERIAL GLASS POWDER USING SAME, AND DOMESTIC APPLIANCE INCLUDING SAME**

(71) Applicant: LG Electronics Inc., Yeongdeungpo-gu Seoul 07336 (KR)
(72) Inventor: KIM, Daesung, Seoul 08592 (KR); KIM, Namjin, Seoul 08592 (KR); KANG, Dongwon, Seoul 08592 (KR); KIM, Young Seok, Seoul 08592 (KR); CHOI, Wongyu, Seoul 08592 (KR)
(74) Representative: Ter Meer und Partner mbB
(86) International application number: PCT/KR2024/001542
(87) International publication number: WO 2025/164830

(57) **Abstract**

The present invention relates to an antibacterial glass composition, a method for manufacturing an antibacterial glass powder using same, and a domestic appliance including same. The antibacterial glass composition according to the present invention, comprises: 55-75 wt% of P₂O₅ and B₂O₃ in total; 12-25 wt% of at least one among ZnO and WO₃; 0.4-3 wt% of MoO₃; and 0.4-3 wt% of Ag₂O, and does not comprise K₂O, Na₂O, or CaO.

Accordingly, the present invention can provide a phosphate-based antibacterial glass composition that exhibits excellent durability and antibacterial performance, even without the inclusion of a melting point-lowering component or structure strengthening component that causes harmful effects.

## Description

### [Technical Field]

The present invention relates to an antibacterial glass composition and a method for manufacturing antibacterial glass powder therefrom, and a domestic appliance including the same.

### [Description of the Related Art]

Microorganisms such as germs, fungi, and bacteria are ubiquitous in our living spaces, such as a water purifier, a refrigerator, an oven, a washing machine, etc. When the microorganisms enter the human body, they can cause life-threatening infections. Accordingly, an antibacterial glass composition capable of controlling the spread of microorganisms in domestic appliances such as a water purifier, a refrigerator, an oven, a washing machine, etc. is required.

In these domestic appliances, bacteria and molds can grow in components formed of plastic injection-molded materials and exposed to moisture, causing problems with their exteriors and a user environment.

The bacteria that inhabit domestic appliances are extremely diverse, and the primary strains can vary depending on the part, but the components exposed to moisture are generally more likely to harbor Pseudomonas aeruginosa.

Accordingly, antibacterial agents need antibacterial performance against these strains. In addition, the antibacterial agents need to be carefully selected from materials with low toxicity to humans and the environment and high-temperature resistance.

The antibacterial agents can be mainly classified into inorganic and organic types. The organic antibacterial agents exert excellent antibacterial performance by dissolving antibacterial agents toward the surface with water, thereby exerting antibacterial activity against bacteria, but durability can be reduced when applied to washing machines. In addition, concerns have been recently raised regarding the human and environmental hazards of the materials eluted from organic antibacterial agents. In addition, due to a low decomposition temperature, there is a risk of decomposition during an injection molding process.

The inorganic antibacterial agent has significantly lower elutability than organic agents and offer high-temperature resistance, but can also cause interfacial wetting issues with plastic injection-molded products, and the high cost of silver, often used as the antibacterial agent, limits their applications.

Antibacterial glass compositions using silver (Ag) as an antibacterial agent are known. Among these, phosphate-based antibacterial glass compositions using phosphate as the primary ingredient are known.

It is important for antibacterial glass compositions containing silver (Ag) to enhance the durability of antibacterial agents and prevent discoloration. However, when a large amount of Al₂O₃ commonly used to enhance the durability of antibacterial agents is added to antibacterial glass compositions, the antibacterial activity of the agent can be reduced.

On the other hand, when Al₂O₃ is excluded from the antibacterial glass composition, a component that lowers the melting point of the antibacterial glass composition needs to be used together, but doing so causes discoloration of silver (Ag).

### [Summary of the invention]

The present invention is directed to providing a novel phosphate-based antibacterial glass composition that exhibits excellent durability and antibacterial performance, even without melting point-lowering component and structure strengthening component that cause adverse effects.

In addition, the present invention is directed to providing a novel phosphate-based antibacterial glass composition capable of preventing discoloration due to reduction of silver (Ag).

In addition, the present invention is directed to providing a novel phosphate-based antibacterial glass composition with enhanced durability and improved antibacterial persistence.

Objects of the present invention are not limited to the above objects, and other objects and advantages of the present invention that are not described can be understood by the following description and will be more clearly understood by various embodiments of the present invention. In addition, it will be able to be easily seen that the objects and advantages of the present invention may be achieved by devices and combinations thereof that are described in the claims.

### [Technical Solution]

The antibacterial glass composition according to the present invention can secure excellent durability and antibacterial performance even without specific melting point lowering component and structure strengthening component.

To this end, the antibacterial glass composition according to the present invention uses the concept of ionization tendency to combine MoO₃ as the melting point lowering component and MgO, ZnO, and/or WO₃ as the structure strengthening components, thereby solving the problems of the related art.

Specifically, the antibacterial glass composition according to the present invention includes 55 to 75 wt% of P₂O₅ and B₂O₃ in total; 0.4 to 3 wt% of MgO; 12 to 25 wt% of at least one of ZnO and WO₃; 0.4 to 3 wt% of MoO₃, and 0.4 to 3 wt% of Ag₂O, and does not include K₂O, Na₂O, and CaO.

In addition, the method for manufacturing an antibacterial glass powder according to the present invention forms the antibacterial glass composition and includes melting, cooling, and grinding.

Next, the domestic appliance of the present invention includes the injection-molded product in which antibacterial glass powder is added to a resin material.

### [Advantageous Effects]

According to the present invention, it is possible to provide the phosphate-based antibacterial glass composition that exhibits excellent durability and antibacterial performance, even without the melting point-lowering component and structure strengthening component that cause harmful effects.

In addition, according to the present invention, it is possible to provide the phosphate-based antibacterial glass composition that exhibits excellent durability and antibacterial performance, as well as preventing discoloration due to reduction of silver (Ag), even without the melting point-lowering component and structure strengthening component that cause harmful effects.

In addition, according to the present invention, it is possible to provide the novel phosphate-based antibacterial glass composition with enhanced durability and improved antibacterial persistence.

Specific effects of the present invention together with the above effects will be described with a description of the following detailed matters for carrying out the invention.

### [Brief description of the drawings]

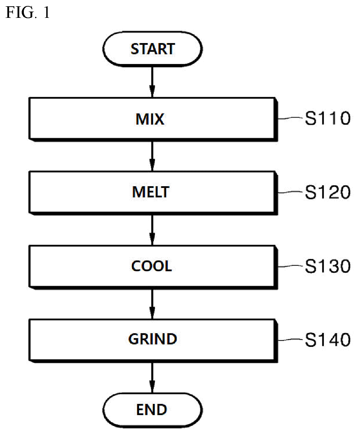

FIG. 1 is a flowchart illustrating a method for manufacturing antibacterial glass powder according to an embodiment of the present invention.

### [Detailed description of the invention]

The above objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

Hereinafter, an antibacterial glass composition, a method for manufacturing antibacterial glass powder therefrom, and a domestic appliance including the same according to some embodiments of the present invention will be described.

### Antibacterial glass composition

The antibacterial glass composition according to the embodiment of the present invention can exhibit excellent durability and antibacterial performance even without melting point lowering component and structure strengthening component that cause adverse effects.

The antibacterial glass composition according to the present invention includes 55 to 75 wt% of P₂O₅ and B₂O₃ in total; 12 to 25 wt% of at least one of ZnO and WO₃; 0.4 to 3 wt% of MoO₃, and 0.4 to 3 wt% of Ag₂O, and does not include K₂O, Na₂O, and CaO.

In addition, the antibacterial glass composition of the present invention may include at least 20 wt% of P₂O₅, preferably 12 to 22 wt% of ZnO, and 5 wt% or less of WO₃.

Hereinafter, the roles and contents of components of the antibacterial glass composition according to the embodiment of the present invention will be described in detail.

### <P₂O₅ and B₂O₃>

In the antibacterial glass composition, the selection of a matrix for containing silver (Ag) needs to consider electrochemical properties and structural aspects of the glass. Silver (Ag) has a high reducibility in terms of ionization tendency. Accordingly, the vitrification of an antibacterial glass composition containing silver (Ag) is affected by the types of glass-forming oxides and modifier oxides.

The ionization tendency is generally known to be centered around alkaline-alkaline earth elements. Here, silver (Ag) is known as an element with high reducibility and low ionization tendency. However, in the present invention, the tendency in an electrophile area rather than a nucleophile area is important. Considering an area in which Ag-Pt-Au-Si-Ti-Ta-C-W-Mo-V-P are sequentially arranged, since Ag and Si have similar ionization tendencies and silicate-based glass has a relatively low amount of non-bridging oxygen, silicate-based glass is disadvantageous for incorporating silver (Ag).

Accordingly, in a P₂O₅-B₂O₃-based matrix, silver (Ag) is advantageous for stable vitrification as an ion.

P₂O₅ and B₂O₃ are representative network-forming oxides that enable vitrification in antibacterial glass compositions. These components serve as structural framework components in the glass. While both components exhibit excellent vitrification properties when used alone at 100 wt%, such glasses exhibit low durability due to their hygroscopicity.

In particular, when both components are used together, the glass structure becomes denser, which can slightly increase durability.

In the present invention, since P₂O₅ and B₂O₃ are low-melting materials and network-forming oxides, when their combined content is added in an amount of less than 55 wt%, the composition falls out of the glass-forming range, resulting in unmelted materials and/or immiscibility. In addition, when P₂O₅ and B₂O₃ exceed 75 wt%, the durability of the glass is reduced and becomes easily soluble in water. Accordingly, initially, the glass exhibits sufficient antibacterial activity, but the antibacterial components and the matrix dissolve in water over time, making long-term use difficult.

To this end, the antibacterial glass composition of the present invention includes 55 to 75 wt% of P₂O₅ and B₂O₃. In addition, the antibacterial glass composition of the present invention may preferably include at least 20 wt% of P₂O₅.

### <MgO, MoO₃, and Ag₂O>

Next, the antibacterial glass composition of the present invention includes MgO, MoO₃, and Ag₂O as modifier oxides.

The modifier oxide refers to an ionically bonded component that cannot form glass on its own but exists as a component of glass, positioning itself between the covalent bonds that form the glass network and influencing the properties of the glass.

When other components are selected in a silver-containing glass composition, ionization tendency is a critical factor. In the nucleophilic area of K-Ca-Na-Mg-Al-Zn-Fe-Ni-Sn-Pb-(H)-Cu-Hg-Ag-Pt, K, Na, and Ca have high ionization tendencies and can reduce silver within the glass or when dissolved out of the glass. Accordingly, the use of K₂O, Na₂O, and CaO was excluded in this development.

First, although MgO is an alkaline earth metal oxide, unlike CaO, it enhances the durability of phosphate-based glass and increases the melting point due to its strong single bonding strength with oxygen and the influence of its ionic size. Accordingly, MgO is typically used in combination with alkali metals or CaO in phosphate-based glasses. The present invention uses a different solution for lowering the melting point. Since the present invention excludes the use of Na₂O, K₂O, and CaO, the antibacterial glass composition of the present invention uses MgO to strengthen the glass structure. MgO is present as a modifier oxide in the glass and increases non-bridging oxygen. However, due to the strong bonding strength of Mg-O and the smaller size of Mg⁺ ions compared to Na⁺, K⁺, and Ca⁺, it exhibits reduced water dissolution, resulting in improved durability. In the initial reaction of the core leaching mechanism in water, which occurs via substitution between H₃O⁺ ions and ionically bonded components in the glass, H₃O⁺ and Ca⁺, Na⁺, K⁺, and Ag⁺ have similar ionic sizes, making substitution-induced leaching facile.

The antibacterial glass composition of the present invention includes 12 to 25 wt% of MgO. When MgO is less than 12 wt%, the durability enhancement achieved by the Mg-O bonding strength is minimal, resulting in reduced antibacterial durability. When MgO exceeds 25 wt%, the melting point of the glass increases significantly, resulting in unmelted glass.

Next, when MoO₃ is added in large amounts to the glass composition, it serves as a network-forming oxide, but when MoO₃ is used in small amounts, as in the present invention, it serves as a modifier oxide that breaks the bridging oxygen of the network-forming oxide and forms non-bridging oxygen. The behavior of MoO₃ within the glass plays a very important role in the present invention. MoO₃ has a high bond valence with oxygen within the glass. Accordingly, MoO₃ may not bond with the network-forming oxide by sharing oxygen. A bond valence of 2 or more with oxygen theoretically indicates a situation in which oxygen atoms are strongly over-bonded. Accordingly, MoO₃ shares oxygen with the cations of the modifier oxide, cleaving the bridging oxygen of the network-forming oxide and forming clusters. In the present invention, MoO₃ coordinates like a cluster near Mg⁺, Ag⁺, and Zn²⁺. An area in which MoO₃ forms a cluster structure is rich in non-bridging oxygen. Accordingly, the area in which MoO3 forms a cluster structure is easily dissolved in water. In addition, Mo has a higher reducibility than Ag in terms of ionization tendency. Accordingly, in the present invention, Mo may play a key role in vitrifying Ag into an ionic state, and Mo effectively exerts its effect by existing adjacent to Ag⁺. When MoO₃ is present at less than 0.4 wt% in the composition of the present invention, the melting point decreases and the ability to inhibit silver reduction is reduced, resulting in non-homogeneous precipitation of Ag. When MoO₃ exceeds 3.0 wt% in the composition of the present invention, the color of the glass loses its transparency and begins to turn black, limiting its applicability. In addition, when the MoO₃ exceeds 3.0 wt% in the composition of the present invention, the water resistance of the glass is reduced.

Next, Ag is a representative component exhibiting antibacterial activity. Ag is present in the glass in the form of a modified oxide (Ag⁺). Adding large amounts of Ag enhances antibacterial activity, but also has disadvantages such as reduced durability, discoloration, and high cost.

The antibacterial glass composition of the present invention includes 0.4 to 3 wt% of Ag₂O. When 0.4 wt% of Ag₂O is added, sufficient antibacterial activity is not achieved due to insufficient dissolved Ag⁺ ions. When the Ag₂O exceeds 3 wt%, the vitrification range is exceeded, leading to the problem of Ag being reduced to metal and precipitated inhomogeneously. Preferably, the antibacterial glass composition of the present invention includes 0.5 to 2.8 wt% of Ag₂O.

### <ZnO and WO₃>

The antibacterial glass composition of the present invention includes 12 to 25 wt% of at least one of ZnO and WO₃ as an intermediate oxide.

The intermediate oxide refers to a component that covalently bonds with and substitutes for a portion of a network-forming oxide, thereby serving as both a network-forming oxide and a modifier oxide.

ZnO is a component that serves as both a network-forming agent and a modifier oxide in terms of glass structure. In addition, in the present invention, ZnO is a key component that exerts an antibacterial effect. The present invention excludes alkaline oxides. In a composition excluding alkaline oxides, the ZnO structure is determined by the P₂O₅/B₂O₃ structure, resulting in a mixture of O-Zn-O covalent bonds and Zn²⁺ ionic bonds. This structure generates a localized positive charge, which differs from the normal negative charge of bacteria. In addition to the ROS generated by this structure, bacteria are subjected to oxidative stress. In the present invention, ZnO is not the primary component exhibiting antibacterial properties, but complements the antibacterial properties of silver and enhances antibacterial durability. Accordingly, unlike conventional techniques that add high amounts of silver to achieve antibacterial durability, which increases the risk of discoloration, the present invention allows for the use of an appropriate amount of silver.

Additionally, nano-ZnO exhibits an effect similar to that of a ceramic material exhibiting ionic properties when combined with O-Zn-O covalent bonds and Zn²⁺ ionic bonds. This state enhances antioxidation performance, and antioxidation performance is not reduced even in the absence of local alkaline oxides.

Next, WO₃ is an intermediate oxide, but its single bonding strength with oxygen is high, making it a component close to a glass-forming oxide. In the present invention, the durability of the glass is enhanced through the P-O-W bond. In addition, the P-O-W bond enhances the hardness of the glass, resulting in a needle-like shape when crushed, unlike the typical corrugated powder. Application of the needle-shaped antibacterial agent improves dispersibility and buoyancy. In addition, in terms of ionization, W serves as an electrophile, maintaining Ag in the Ag⁺ state. Accordingly, W prevents the reduction of silver, both within the glass and after being eluted from the glass. This indicates that it can exhibit antioxidation performance.

In the present invention, when ZnO and WO₃ are added in amounts less than 12 wt%, the durability of the antibacterial agent is reduced, resulting in reduced antibacterial sustainability and reduced antioxidation performance. Conversely, when ZnO and WO₃ are added in amounts exceeding 25 wt%, the melting point of the glass significantly increases, resulting in unmelted glass.

More preferably, the antibacterial glass composition of the present invention includes 12 to 22 wt% of ZnO and 3 wt% or less of WO₃.

The phosphate-based glass, such as the antibacterial glass composition of the present invention, is hygroscopic and thus readily dissolves in water. The phosphate-based glass antibacterial agents commonly used uses Al₂O₃ (or ZrO₂) to enhance durability. The structure of the glass is strengthened by a P-O-Al structure, reducing non-bridging oxygen and strengthening the glass. In this case, this process increases the melting point. In addition, a method of adding ZnO to prevent discoloration of silver-containing glass due to the reduction of Ag⁺ to Ag⁰ is used. Adding ZnO in small amounts to phosphate-based glass does not affect the melting point, but adding large amounts to prevent discoloration increases the melting point. In the silver-containing phosphate-based glass, alkali metals (Na₂O, K₂O) and alkaline earth metals (CaO) are commonly used to reduce the melting point. The presence of these alkali or alkaline earth metals promotes the Ag⁺→Ag⁰ reaction, which causes silver discoloration. Accordingly, silver precipitation or reduction occurs during the vitrification process. Accordingly, when Na₂O, K₂O, and CaO are used in phosphate-based glasses, problems such as silver discoloration and reduced durability arise.

The present invention provides a novel antibacterial glass composition that can overcome silver discoloration and reduced durability, which are chronic problems in the design of silver-containing phosphate-based glasses.

Due to the above-described component/structural characteristics, the antibacterial glass composition of the present invention prevents discoloration and improves antibacterial durability compared to conventional silver-based glasses.

### Method for manufacturing antibacterial glass powder

Hereinafter, the method for manufacturing antibacterial glass powder according to the embodiment of the present invention will be described with reference to the accompanying drawings.

FIG. 1 is a flowchart illustrating a method for manufacturing antibacterial glass powder according to an embodiment of the present invention.

As illustrated in FIG. 1, the method for manufacturing antibacterial glass powder according to the embodiment of the present invention includes a mixing operation S110, a melting operation S120, a cooling operation S130, and a grinding operation S140.

### Mixing

In the mixing operation S110, the antibacterial glass composition is formed, and the characteristics of the antibacterial glass composition are as described above.

### Melting

In the melting operation S120, the antibacterial glass composition is molten.

In this operation, melting is preferably performed at 1,100 to 1,400 °C for 1 to 60 minutes. When the melting temperature is less than 1,100 °C or the melting time is less than 1 minute, the antibacterial glass composition may not be completely molten, leading to incompatibility of the glass melt. Conversely, when the melting temperature exceeds 1,400 °C or the melting time exceeds 60 minutes, excessive energy and time are required, making the process uneconomical.

### Cooling

In the cooling operation S130, the molten antibacterial glass composition is cooled to room temperature.

In this operation, cooling is preferably performed by a cooling in-furnace method. When air or water cooling is used, internal stress in the antibacterial glass may be severe, potentially leading to cracks, and thus the in-furnace cooling is preferred.

### Grinding

In the grinding operation S140, the cooled antibacterial glass is ground. In this case, any of the widely known ball mills, jet mills, or planetary mills may be used for grinding.

Through this grinding, the antibacterial glass is finely ground to manufacture antibacterial glass powder. The antibacterial glass powder preferably has an average diameter of 30 µm or less, and a more preferred range ranges from 2 to 12 µm.

### Domestic appliance

Meanwhile, a domestic appliance according to an embodiment of the present invention includes a resin material and a plastic injection-molded product to which the antibacterial glass powder manufactured by the above method has been added. The domestic appliance used in the present invention may include a water purifier, a washing machine, a stand air conditioner, a system air conditioner, a refrigerator, etc., but is not limited thereto.

Here, the plastic injection-molded product contains 95.0 to 99.0 wt% of the resin material and 1.0 to 5.0 wt% of the antibacterial glass powder.

When the amount of antibacterial glass powder added is less than 1.0 wt% of the total weight of the plastic injection-molded product, the antibacterial activity against Pseudomonas aeruginosa may not be sufficient. Conversely, when the amount of antibacterial glass powder exceeds 5.0 wt% of the total weight of the plastic injection-molded product, mechanical properties can be reduced.

The resin material includes at least one of polypropylene (PP), polycarbonate (PC), ethylene propylene rubber (EPDM), acrylonitrile-buradiene-styrene (ABS), and high-impact polystyrene (HIPS).

In this case, the component of the antibacterial glass powder is the same as the antibacterial glass composition.

In addition, the plastic injection-molded product may further include functional additives in addition to the antibacterial glass powder. In this case, the functional additives may include at least one selected from the group consisting of an antioxidant, a foaming agent, an impact modifier, a nucleating agent, and a coupling agent.

Accordingly, the domestic appliance according to the embodiment of the present invention is applied to the surfaces of components susceptible to bacterial growth and frequently exposed to moisture, thereby providing antibacterial properties that prevent the growth and infestation of various microorganisms.

In addition, the antibacterial glass powder of the present invention may be used not only as an injection-molded product, but also as a coating material for glass shelves and as an additive for paints or powder coatings.

### Examples

Hereinafter, the configuration and operation of the present invention will be described in more detail through various exemplary examples of the present invention. However, this is suggested as exemplary examples of the present invention and may not be construed as limiting the present invention thereby in any sense.

Since descriptions not provided in this section may be technically inferred by those skilled in the art, the descriptions thereof will be omitted.

### 1. Manufacturing of antibacterial glass powder samples

Table 1 shows compositions and composition ratios of the antibacterial glass compositions of examples and comparative examples.

The antibacterial glass compositions having compositions described in the examples and comparative examples were molten in an electric furnace at 1,200 °C and then cooled to a bulk glass form on a stainless steel plate by air cooling. Then, the obtained glass was ground using a dryer grinder (jet mill), and antibacterial glass powder samples with a D50 particle size of 2 to 12 µm were manufactured.

Here, the raw material for the component Ag₂O was selected from among AgNO₃, Ag₃PO₄, and Ag₂O, each calculated based on stoichiometry. The remaining components were either identical or mixed compounds as shown in the tables. The remaining components were the same as those listed in Tables 1 and 2. In addition, vitrification was classified based on whether the glass exhibited a homogeneous glassy appearance or whether opalescence and unmolten material occurred.

**[Table 1]**

| Items | Examples | | | | Comparative Examples | | | | |
|---|---|---|---|---|---|---|---|---|---|
| | 1 | 2 | 3 | 4 | 1 | 2 | 3 | 4 | 5 |
| P₂O₅ | 52.6 | 62.6 | 52.6 | 32.6 | 72.6 | 65.9 | 59.4 | 49.8 | 39.4 |
| B₂O₃ | 12.2 | 10.4 | 3.9 | 26.4 | 8.3 | 6.7 | 6 | 11.5 | 4.9 |
| CaO | 0 | 0 | 0 | 0 | 0 | 9.1 | 0 | 1 | 0 |
| MgO | 20.7 | 13.2 | 23.7 | 14.8 | 9.2 | 8.7 | 15.8 | 10.5 | 27.3 |
| WO₃ | 0.7 | 0.7 | 2.1 | 1.4 | 0 | 0 | 5.4 | 0 | 0 |
| ZnO | 12.1 | 12.1 | 12.3 | 21.9 | 8.9 | 7.9 | 12.8 | 25.8 | 27.3 |
| MoO₃ | 0.9 | 0.5 | 2.8 | 1.7 | 0.5 | 0.9 | 0.4 | 0.2 | 0.6 |
| Ag₂O | 0.8 | 0.5 | 2.6 | 1.2 | 0.5 | 0.8 | 0.2 | 1.2 | 0.5 |
| Total | 100 | 100 | 100 | 100 | 100 | 100 | 100 | 100 | 100 |

| | | | | | | | | | |
|---|---|---|---|---|---|---|---|---|---|
| (units: wt%) | | | | | | | | | |

### 2. Physical property evaluation of antibacterial glass powder

Table 2 shows the results of the physical property evaluation for the samples manufactured according to the examples and comparative examples.

### 1) Antibacterial activity measurement

For the examples and comparative examples in which the glass was uniformly vitrified, antibacterial activity was evaluated against four bacterial strains (Staphylococcus aureus, Escherichia coli, Klebsiella pneumoniae, and Pseudomonas aeruginosa) using the shaking flask method (ASTM E2149-13a).

### 2) Antibacterial activity measurement after durability evaluation

To evaluate the durability of the examples and comparative examples in which the glass was uniformly vitrified, after the samples were exposed to moisture according to the ASTM C1285-14 test method (evaluation of durability of glass and glass ceramics), the above antibacterial activity test was additionally conducted (50 °C, 32 hours).

**[Table 2]**

| | | | | | | | | | | |
|---|---|---|---|---|---|---|---|---|---|---|
| Items | | Examples | | | | Comparative Examples | | | | |
| | | 1 | 2 | 3 | 4 | 1 | 2 | 3 | 4 | 5 |

| Vitrification (O, X) | | O | O | O | O | O | O | O | X | X |
|---|---|---|---|---|---|---|---|---|---|---|
| Antibacterial activity | Staphylococcus aureus | 99.9% | 99.9% | 99.9% | 99.9% | 99.9% | 99.9% | 87.6% | - | - |
| | Escherichia coli | 99.9% | 99.9% | 99.9% | 99.9% | 99.9% | 99.9% | 79.6% | - | - |
| | Klebsiella pneumoniae | 99.9% | 99.9% | 99.9% | 99.9% | 99.9% | 99.9% | 60.4% | - | - |
| | Pseudomonas aeruginosa | 99.9% | 99.9% | 99.9% | 99.9% | 99.9% | 99.9% | 98.8% | - | - |
| (After durability evaluation) Antibacterial activity | Staphylococcus aureus | 99.9% | 99.3% | 99.9% | 99.9% | 37.4% | 23.4% | - | - | - |
| | Escherichia coli | 99.9% | 99.9% | 99.9% | 99.9% | 42.7% | 45.4% | - | - | - |
| | Klebsiella pneumoniae | 99.9% | 99.9% | 99.9% | 99.9% | 45.8% | 65.3% | - | - | - |
| | Pseudomonas aeruginosa | 99.9% | 99.9% | 99.9% | 99.9% | 92.4% | 82.8% | - | - | - |

As shown in Table 2, the samples prepared according to Examples 1 to 4 exhibited antibacterial activity of over 99% against all four bacterial strains. In addition, even after exposure to moisture according to the durability evaluation method, the samples prepared according to Examples 1 to 4 still exhibited antibacterial activity exceeding 99%.

On the other hand, for the comparative examples, Comparative Examples 4 and 5 did not achieve uniform vitrification. In addition, the samples prepared according to Comparative Examples 1 and 3 did not exhibit significant antibacterial activity against any of the four bacterial strains.

Although the present invention has been described above with reference to exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

## Claims

1. An antibacterial glass composition comprising:
55 wt% to 75 wt% of P₂O₅ and B₂O₃ in total;
12 wt% to 25 wt% of MgO;
12 wt% to 25 wt% of at least one of ZnO and WO₃;
0.4 wt% to 3 wt% of MoO₃; and
0.4 wt% to 3 wt% of Ag₂O, and
does not comprise K₂O, Na₂O, and CaO.

2. The antibacterial glass composition of claim 1, comprising 20 wt% or more of the P₂O₅.

3. The antibacterial glass composition of claim 1, comprising 12 wt% to 22 wt% of ZnO; and
3 wt% or less of the WO₃.

4. A method for manufacturing an antibacterial glass composition, the method comprising:
an operation (a) of mixing and stirring a composition including 12 to 25 wt% of MgO,
12 wt% to 25 wt% of at least one of ZnO and WO₃,
0.4 wt% to 3 wt% of MoO₃, and
0.4 wt% to 3 wt% of Ag₂O and not including K₂O, Na₂O, and CaO to form an antibacterial glass composition;
an operation (b) of melting the antibacterial glass composition;
an operation (c) of cooling the molten antibacterial glass composition; and
an operation (d) of grinding the cooled antibacterial glass composition.

5. The method of claim 4, wherein, in the operation (a), the antibacterial glass composition includes 20 wt% or more of the P₂O₅.

6. The method of claim 4, wherein, in the operation (a), the antibacterial glass composition includes:
12 wt% to 22 wt% of ZnO; and
3 wt% or less of the WO₃.

7. The method of claim 4, wherein, in the operation (b), the melting is performed at 1,100 to 1,400 °C for 1 to 60 minutes.

8. A domestic appliance including a plastic injection-molded product in which antibacterial glass powder is added to a resin material,
wherein the plastic injection-molded product includes:
95.0 to 99.0 wt% of the resin material; and
1.0 to 5.0 wt% of the antibacterial glass powder, and
an antibacterial glass powder includes:
12 to 25 wt% of MgO;
12 wt% to 25 wt% of at least one of ZnO and WO₃;
0.4 wt% to 3 wt% of MoO₃; and
0.4 wt% to 3 wt% of Ag₂O, and
does not include K₂O, Na₂O, and CaO.

9. The domestic appliance of claim 9, wherein the resin material includes at least one of polypropylene (PP), polycarbonate (PC), ethylene propylene rubber (EPDM), acrylonitrile-buradiene-styrene (ABS), and high-impact polystyrene (HIPS).

10. The domestic appliance of claim 9, wherein the antibacterial glass powder includes 20 wt% or more of the P₂O₅.

11. The domestic appliance of claim 9, the antibacterial glass powder includes:
12 wt% to 22 wt% of ZnO; and
3 wt% or less of the WO₃.
